# EUROPEAN PATENT SPECIFICATION

(11) **EP 3 613 711 B1**
(45) Date of publication and mention of the grant of the patent: **11.12.2024**
(21) Application number: 18190032.5
(22) Date of filing: 21.08.2018
(51) Int. Cl.: C03C 17/00, C03C 17/02, C03C 23/00

(54) **HOLLOW BODY HAVING A WALL OF GLASS WITH A SURFACE REGION HAVING CONTENTS OF SI AND N**
HOHLKÖRPER MIT EINER GLASWAND MIT EINEM OBERFLÄCHENBEREICH MIT EINEM INHALT VON SI UND N
CORPS CREUX AYANT UNE PAROI DE VERRE COMPORTANT UNE RÉGION DE SURFACE AYANT DES CONTENUS DE SI ET N

(43) Date of publication of application: 26.02.2020
(73) Proprietor: SCHOTT Pharma AG & Co. KGaA, 55122 Mainz (DE)
(72) Inventor: Rudigier-Voigt, Eveline, 55128 Mainz (DE); Mangold, Stephanie, 55288 Schornsheim (DE); Weber, Urban, 55413 Weiler (DE); Muth, Stefan, 55270 Ober-Olm (DE); Verma, Anna Kathrin, 63069 Offenbach (DE); Gönüllü, Yakup, 55270 Essenheim (DE)
(74) Representative: Herzog IP Patentanwalts GmbH

(56) References cited:
- US-A1- 2015 299 851
- US-A1- 2017 369 989
- DATABASE WPI Week 198930, Derwent World Patents Index; AN 1989-218093, XP002788498
- DATABASE WPI Week 200775, Derwent World Patents Index; AN 2007-801331, XP002788499

## Description

The present invention refers to a hollow body comprising a wall of glass which at least partially surrounds an interior volume of the hollow body; wherein the wall of glass has a wall surface, which comprises a surface region; wherein at least in the surface region the wall surface has a content of
a) N in a range from 0.3 to 10.0 at-%, and
b) Si at least 5 at-%,
wherein the preceding contents are determined by an X-ray photoelectron spectroscopy; wherein the wall of glass comprises a wall region, which has the surface region; wherein in the wall region the wall of glass has a content of chemically bound N which is detectable by a time-of-flight secondary ion mass spectrometry; wherein the wall of glass has a wall thickness; wherein in the wall region the wall of glass has the content of chemically bound N throughout a functionalising depth which extends from the wall surface along the wall thickness into the wall of glass; wherein the functionalising depth is in a range from 5 nm to 10 µm. Further, the invention refers to a process for making the hollow body; to a closed container; to a process for making the closed container; and to a use of the hollow body for packaging a pharmaceutical composition.

Containers made from glass have been applied for transporting fluids and powders safely since several centuries. In the last decades, the arts in which glass containers are used for transporting fluids and powders have become increasingly diverse and sophisticated. One such art is the technical field of the present application: pharmaceutical packaging. In the pharmaceutical industry, glass containers - such as vials, syringes, ampules and cartridges - are applied as primary packaging for all kinds of pharmaceutically relevant compositions, in particular drugs, such as vaccines. Specifically in this art, the requirements put on the glass containers have become more and more sophisticated, recently.

Glass containers for pharmaceutical packaging are typically cleaned, sterilised, filled and closed, on an industrial scale in a line of processing, referred to as filling line in this document. There is a need to increase a production rate of such a filling line in the art. This may be implemented by increasing a velocity of the filling line and / or by reducing shut down times due to disruptions of the processing. In the prior art, such disruptions are typically caused by the occurrence of breakage of glass containers during processing, in particular due to high transportation velocities on the filling line. If such breakage occurs, production has to be stopped, the line has to be cleaned thoroughly from particles and dust and then the system has to be readjusted before it is started again. Contamination of the glass containers with any kind of pharmaceutically relevant particles, in particular glass particles, or pharmaceutically relevant substances has to be avoided strictly, in particular if parenteralia are packaged.

Further, scratching of the glass surfaces of the containers has to be avoided as far as possible. Scratches on the container surface may hamper an optical inspection of the filled containers, in particular for the presence of pharmaceutically relevant particles. Further, scratching can lead to glass particles or dust being disassociated from the containers. These particles and dust may contaminate the containers on the filling line.

In general, attempts to solve the above problems by applying a coating to the container surface are known in the prior art. The requirements on such coatings are rather sophisticated. They have to withstand high temperatures which occur in a sterilisation treatment referred to in the art as depyrogenisation. Further, the coatings have to withstand low temperature treatments such as freeze drying. Even more, the coatings have to withstand washing processes, which include increased temperatures and mechanical influences. This means that the advantageous properties which the coating provides to the exterior surface of the container have to be maintained and, in addition, contamination of the container interior with any pharmaceutically relevant particle or substance from the coating has to be avoided. The preceding sophisticated requirements have led to the development of rather complex multilayer coatings of the prior art. Such multilayer coatings are typically complex and costly to apply and thus, run contrary to the need for high processing rates.

In the prior art, US 2015/0299851 A1 teaches a composite material for a pharmaceutical packaging made of a glass or COC or COP substrate to which a protective layer is applied, and to a container made of such composite material.

Further, US 2017/0369989 A1 discloses ion-implanted glass-based articles with improved flaw suppression properties. These ion-implanted glass-based articles generally have a final indent fracture threshold load of at least 650 grams, and/or a scratch threshold force of at least 10 N, which represents at least 1.25-fold enhancement compared to the glass-based article prior to ion-implantation.

JP H01 157437 A aims to increase the density of glass, to improve the alkali diffusion preventing ability, surface hardness and electric resistance and to modify the surface of the glass at a low temperature by introducing N₂ into the glass with plasma of an N-containing gas, generated by a glow discharge.

In general, it is an object of the present invention to at least partly overcome a disadvantage arising from the prior art.

It is a further object of the invention to provide a glass container for pharmaceutical packaging which allows for an increase of a production rate of a filling line. Further, it is an object of the present invention to provide a glass container for pharmaceutical packaging which allows for an increase of a processing speed of a filling line, or for a reduction of disruptions of a filling line, or both. It is yet another object of the invention to provide a glass container for pharmaceutical packaging which shows a reduced tendency to being damaged or even broken while being processed on a filling line. According to another object of the invention, one of the above advantageous containers is provided, wherein the container is further suitable for an easy and reliable optical inspection after having been filled. According to yet another object of the invention, one of the above advantageous containers is provided, wherein the container does not show an increased tendency to being contaminated in a pharmaceutically relevant manner, preferably the container shows a reduced tendency to being contaminated. The preceding contamination refers, in particular, to the presence of a contaminating organic composition in the container interior. In this context, the container preferably comprises no multilayer coating, more preferably no coating at all, which could be a potential source of contamination. It is yet a further object of the invention to provide one of the above advantageous glass containers for pharmaceutical packaging, wherein the container cane be labelled easily. According to yet another object of the invention, one of the above advantageous containers is provided, wherein the container is further suitable for a post-treatment, for example a sterilisation treatment, which may be effected as a high-temperature-treatment - in particular a depyrogenisation; or a washing process; or a low-temperature-treatment - in particular a freeze drying. It is another object of the invention to provide a process for producing one of the above advantageous glass containers for pharmaceutical packaging, wherein the process is less complex.

A contribution to at least partly solving at least one, preferably more than one, of the above objects is made by the independent claims. The dependent claims provide preferred embodiments which contribute to at least partly solving at least one of the objects.

A contribution to solving at least one of the objects according to the invention is made by an embodiment 1 of a hollow body 1, comprising a wall of glass which at least partially surrounds an interior volume of the hollow body; wherein the wall of glass has a wall surface, which comprises a surface region; wherein at least in the surface region the wall surface has a content of
a) N in a range from 0.3 to 10.0 at-%, preferably from 0.35 to 10 at-%, more preferably from 0.4 to 10.0 at-%, more preferably from 0.45 to 10.0 at-%, more preferably from 0.5 to 10.0 at-%, more preferably from 0.55 to 10.0 at-%, more preferably from 0.6 to 10.0 at-%, more preferably from 0.7 to 10.0 at-%, more preferably from 0.8 to 10.0 at-%, more preferably from 0.9 to 10.0 at-%, more preferably from 1.0 to 10.0 at-%, more preferably from 1.0 to 9.0 at-%, preferably from 1.0 to 8.0 at-%, more 1.0 to 7.0 at-%, more 1.0 to 6.0 at-%, more 1.0 to 5.0 at-%, more 1.0 to 4.0 at-%, even more 1.0 to 3.0 at-%, most preferably from 1.0 to 2.0 at-%, and
b) Si at least 5 at-%, preferably at least 10 at-%, more preferably at least 11 at-%, more preferably at least 12 at-%, even more preferably at least 13 at-%, most preferably at least 14 at-%,
wherein the preceding contents are determined by an X-ray photoelectron spectroscopy; wherein the wall of glass comprises a wall region, which has the surface region; wherein in the wall region the wall of glass has a content of chemically bound N which is detectable by a time-of-flight secondary ion mass spectrometry (ToF-SIMS); wherein the wall of glass has a wall thickness; wherein in the wall region the wall of glass has the content of chemically bound N throughout a functionalising depth which extends from the wall surface along the wall thickness into the wall of glass; wherein the functionalising depth is in a range from 5 nm to 10 µm. In a preferred embodiment, the wall surface has content of N in a range from 0.3 to 9.0 at-%, preferably from 0.3 to 8.0 at-%, more 0.3 to 7.0 at-%, more 0.3 to 6.0 at-%, more 0.3 to 5.0 at-%, from 0.35 to 5.0 at-%, more preferably from 0.4 to 5.0 at-%, more preferably from 0.45 to 5.0 at-%, more preferably from 0.5 to 5.0 at-%, more preferably from 0.55 to 5.0 at-%, more preferably from 0.6 to 5.0 at-%, more preferably from 0.7 to 5.0 at-%, more preferably from 0.8 to 5.0 at-%, more preferably from 0.9 to 5.0 at-%, more preferably from 1.0 to 5.0 at-%, more 1.0 to 4.0 at-%, even more 1.0 to 3.0 at-%,most preferably from 1.0 to 2.0 at-%, in each case in the surface region. In a preferred embodiment, the content of Si of the wall surface in the surface region is in a range from 5 to 50 at. %, preferably from 5 to 40 at-%, more preferably from 10 to 35 at-%, most preferably from 12 to 30 at-%.

Preferably, the wall of glass essentially consists of the glass. At least in the surface region, the wall of glass is preferably not coated. Particularly preferable, at least in the surface region, the wall of glass is not coated with any composition which comprises N.

In an embodiment 2 of the hollow body 1 according to the invention, the hollow body 1 is designed according to its embodiment 1, wherein in the surface region the wall surface further has a content of O in a range from 35 to 70 at-%, preferably from 40 to 70 at-%, more preferably from 40 to 65 at-%, more preferably from 45 to 65 at-%, most preferably from 50 to 65 at-%, wherein the content of O is determined by the X-ray photoelectron spectroscopy.

In an embodiment 3 of the hollow body 1 according to the invention, the hollow body 1 is designed according to its embodiment 1 or 2, wherein in the surface region the wall surface further has content of C of less than 20 at-%, preferably less than 15 at-%, more preferably less than 10 at-%, wherein the content of carbon atoms is determined by the X-ray photoelectron spectroscopy.

In an embodiment 4 of the hollow body 1 according to the invention, the hollow body 1 is designed according to any of its preceding embodiments, wherein in the surface region the wall surface further has content of alkali metal atoms and alkali metal ions in sum of at least 1 at-%, preferably at least 2 at-%, more preferably at least 3 at-%, even more preferably at least 4 at-%, most preferably at least 5 at-%,wherein the content of alkali metal atoms and alkali metal ions is determined by the X-ray photoelectron spectroscopy.

In an embodiment 5 of the hollow body 1 according to the invention, the hollow body 1 is designed according to any of its preceding embodiments, wherein the content of chemically bound N is detectable by the time-of-flight secondary ion mass spectrometry in form of SiN.

In an embodiment 6 of the hollow body 1 according to the invention, the hollow body 1 is designed according to any of its preceding embodiments, wherein the functionalising depth is less than the wall thickness in the wall region.

In an embodiment 7 of the hollow body 1 according to the invention, the hollow body 1 is designed according to any of its preceding embodiments, wherein the functionalising depth is in a range from 5 nm to 5 µm, preferably from 5 nm to 3 µm, more preferably from 5 nm to 1 µm, more preferably from 5 to 500 nm, more preferably from 5 to 300 nm, more preferably from 5 to 150 nm, even more preferably from 5 to 100 nm, even more preferably from 5 to 50 nm, most preferably 5 to 20 nm.

In an embodiment 8 of the hollow body 1 according to the invention, the hollow body 1 is designed according to any of its preceding embodiments, wherein the X-ray photoelectron spectroscopy of the surface region shows an Si2p-peak at a binding energy of less than 103.5 eV, preferably less than 103.4 eV, more preferably less than 103.3 eV, even more preferably less than 103.2 eV, most preferably less than 103.1 eV.

In an embodiment 9 of the hollow body 1 according to the invention, the hollow body 1 is designed according to any of its preceding embodiments, wherein the X-ray photoelectron spectroscopy of the surface region shows an Si2p-peak at a binding energy in a range from 102.5 to 103.4 eV, preferably from 102.5 to 103.3 eV, more preferably from 102.5 to 103.2 eV, most preferably from 102.5 to 103.1 eV.

In an embodiment 10 of the hollow body 1 according to the invention, the hollow body 1 is designed according to any of its preceding embodiments, wherein the X-ray photoelectron spectroscopy of the surface region shows an N1s-peak at a binding energy in a range from 397.5 to 405.0 eV, preferably from 397.5 to 404.5 eV, more preferably from 398.0 to 404.5 eV, more preferably from 399.0 to 404.5 eV, more preferably from 400.0 to 404.5 eV, more preferably from 401.0 to 404.5 eV, more preferably from 401.5 to 404.5 eV, more preferably from 402.0 to 404.0 eV, more preferably from 402.5 to 404.0 eV, most preferably from 403.0 to 404.0 eV.

In an embodiment 11 of the hollow body 1 according to the invention, the hollow body 1 is designed according to any of its preceding embodiments, wherein the wall surface comprises
a] an interior surface which faces the interior volume, and
b] an exterior surface which faces away from the interior volume;
wherein the interior surface, or the exterior surface, or both comprises the surface region. In a preferred embodiment, the exterior surface comprises the surface region. In a further preferred embodiment, the exterior surface and the interior surface together comprise the surface region. In a further preferred embodiment, the surface region is the exterior surface. In yet a further preferred embodiment, the surface region comprises at least a part of the exterior surface, preferably the full exterior surface, or at least a part of the interior surface, preferably the full interior surface, or both. In yet a further preferred embodiment, the surface region forms the full wall surface. Preferably, the surface area forms at least 10 %, preferably at least 20 %, more preferably at least 30 %, more preferably at least 40 %, more preferably at least 50 %, more preferably at least 60 %, more preferably at least 70 %, more preferably at least 80 %, even more preferably at least 90 %, in each case of the exterior surface, most preferably the full exterior surface. Preferably, the wall surface consists of the interior surface and the exterior surface.

In an embodiment 12 of the hollow body 1 according to the invention, the hollow body 1 is designed according to any of its preceding embodiments, wherein the glass of the wall of glass has a content of alkali metal atoms and alkali metal ions of in sum at least 1 wt.-%, preferably at least 2 wt.-%, more preferably at least 3 wt.-%, even more preferably at least 4 wt.-%, most preferably at least 5 wt.-%, in each case based on the weight of the glass. Typically, the content of alkali metal atoms and alkali metal ions is in sum not more than 20 wt.-%, preferably not more than 15 wt.-%, in each case based on the weight of the glass.

In an embodiment 13 of the hollow body 1 according to the invention, the hollow body 1 is designed according to any of its preceding embodiments, wherein the glass of the wall of glass is a borosilicate glass or an aluminosilicate glass or both.

In an embodiment 14 of the hollow body 1 according to the invention, the hollow body 1 is designed according to any of its preceding embodiments, wherein at least in the surface region the wall surface has a coefficient of dry sliding friction of less than 0.4, preferably less than 0.3, more preferably less than 0.2.

In an embodiment 15 of the hollow body 1 according to the invention, the hollow body 1 is designed according to any of its preceding embodiments, wherein the hollow body has a transmission coefficient for a transmission of light of a wavelength in a range from 400 nm to 2300 nm, preferably from 400 to 500 nm, more preferably from 430 to 490 nm, through the hollow body via the surface region of more than 0.7, preferably more than 0.75, more preferably more than 0.8, more preferably more than 0.81, more preferably more than 0.82, more preferably more than 0.83, more preferably more than 0.84, most preferably more than 0.85. Preferably, the preceding transmission coefficient holds for light of each wavelength in the range from 400 nm to 2300 nm, preferably from 400 to 500 nm, more preferably from 430 to 490 nm.

In an embodiment 16 of the hollow body 1 according to the invention, the hollow body 1 is designed according to any of its preceding embodiments, wherein the hollow body has a haze for a transmission of light through the hollow body via the surface region in a range from 5 to 50 %, preferably from 10 to 40 %, more preferably from 10 to 35 %, more preferably from 15 to 25 %, preferably from 15 to 22 %. Preferably, the preceding haze values refer to a hollow body having an interior volume of about 2 ml and to a transmission of the light through a part of the hollow body which is of the shape of a hollow cylinder.

In an embodiment 17 of the hollow body 1 according to the invention, the hollow body 1 is designed according to any of its preceding embodiments, wherein the wall surface comprises an exterior surface, which faces away from the interior volume; wherein the surface region forms 5 to 100 %, preferably 10 to 100 %, more preferably 20 to 100 %, more preferably 30 to 100 %, more preferably 40 to 100 %, more preferably 50 to 100 %, more preferably 60 to 100 %, more preferably 70 to 100 %, more preferably 80 to 100 %, most preferably 90 to 100 %, in each case of a surface area of the exterior surface.

In an embodiment 18 of the hollow body 1 according to the invention, the hollow body 1 is designed according to any of its preceding embodiments, wherein the glass of the wall of glass is of a type selected from the group consisting of a borosilicate glass, preferably a type I glass; an aluminosilicate glass; and fused silica; or of a combination of at least two thereof.

In an embodiment 19 of the hollow body 1 according to the invention, the hollow body 1 is designed according to any of its preceding embodiments, wherein the interior volume is in a range from 0.5 to 100 ml, preferably from 1 to 100 ml, more preferably from 1 to 50 ml, even more preferably from 1 to 10 ml, most preferably from 2 to 10 ml.

In an embodiment 20 of the hollow body 1 according to the invention, the hollow body 1 is designed according to any of its preceding embodiments, wherein the hollow body is a container.

In an embodiment 21 of the hollow body 1 according to the invention, the hollow body 1 is designed according to its embodiment 20, wherein the container is a packaging container for a medical or a pharmaceutical packaging good or both. Preferably, the container is a primary packaging container for a medical or a pharmaceutical packaging good or both. A preferred pharmaceutical packaging good is a pharmaceutical composition. Preferably, the container is suitable for packaging parenteralia in accordance with section 3.2.1 of the European Pharmacopoeia, 7th edition from 2011.

In an embodiment 22 of the hollow body 1 according to the invention, the hollow body 1 is designed according to its embodiment 20 or 21, wherein the container is one selected from the group consisting of a vial, a syringe, a cartridge, and an ampoule; or a combination of at least two thereof.

In an embodiment 23 of the hollow body 1 according to the invention, the hollow body 1 is designed according to any of its preceding embodiments, wherein the wall of glass comprises from top to bottom of the hollow body
a} a top region;
b} a body region, which follows the top region via a shoulder; and
c} a bottom region, which follows the body region via a heel.
Preferably, the body region is a lateral region of the hollow body. Particularly preferable, the body region of the wall forms a hollow cylinder. Preferably, one selected from the group consisting of the body region, the shoulder, the bottom region, and the heel, or a combination of at least two thereof comprises the surface region. Particularly preferred, the body region, or the shoulder, or both comprises the surface region. In a case in which the surface region is comprised by two or more of the preceding regions of the wall, the surface region may be a non-coherent region which consists of two or more distinct part regions. However, preferably the surface region is a coherent region. The top region preferably comprises, more preferably consists of, from top to bottom of the hollow body a flange and a neck.

In an embodiment 24 of the hollow body 1 according to the invention, the hollow body 1 is designed according to its embodiment 23, wherein in the body region the wall surface comprises at least a part of the surface region. Preferably, the surface region forms the wall surface at least in the body region.

In an embodiment 25 of the hollow body 1 according to the invention, the hollow body 1 is designed according to its embodiment 23 or 24, wherein throughout the body region a wall thickness of the wall of glass is in a range from ±0.3 mm, preferably ±0.2 mm, more preferably ±0.1 mm, most preferably ±0.08 mm, in each case based on a mean value of the wall thickness in the body region.

In an embodiment 26 of the hollow body 1 according to the invention, the hollow body 1 is designed according to any of its embodiments 23 to 25, wherein throughout the body region a wall thickness of the wall of glass is in a range from 0.2 to 5 mm, preferably from 0.4 to 3 mm, more preferably from 0.5 to 2 mm, most preferably from 0.6 to 1.5 mm. In a preferred embodiment throughout the body region a thickness of the layer of glass is in a range from 0.9 to 1.1 mm. In a further preferred embodiment throughout the body region a thickness of the layer of glass is in a range from 1.5 to 1.7 mm.

In an embodiment 27 of the hollow body 1 according to the invention, the hollow body 1 is designed according to any of its preceding embodiments, wherein towards the interior volume the wall of glass is at least partially superimposed by an alkali metal barrier layer or by a hydrophobic layer or both.

In an embodiment 28 of the hollow body 1 according to the invention, the hollow body 1 is designed according to any of its preceding embodiments, wherein in the surface region the wall surface further has content of B of at least 0.5 at-%, preferably at least 1.0 at-%, more preferably at least 1.5 at-%, most preferably at least 1.7 at-%, wherein the content of B is determined by the X-ray photoelectron spectroscopy.

In an embodiment 29 of the hollow body 1 according to the invention, the hollow body 1 is designed according to any of its preceding embodiments, wherein the interior volume comprises a pharmaceutical composition.

A contribution to solving at least one of the objects according to the invention is made by an embodiment 1 of a process 1 for making the hollow body 1 according to any of its embodiments, the process comprising as process steps
a) providing a hollow body, comprising a wall of glass,
   wherein the wall of glass
   i) at least partially surrounds an interior volume of the hollow body,
   ii) has a wall surface, which comprises a surface region,
   iii) comprises a wall region, which has the surface region; and
b) introducing N at least into the wall region, thereby obtaining a content of N of the wall surface at least in the surface region in a range from 0.3 to 10.0 at-%, preferably from 0.35 to 10 at-%, more preferably from 0.4 to 10.0 at-%, more preferably from 0.45 to 10.0 at-%, more preferably from 0.5 to 10.0 at-%, more preferably from 0.55 to 10.0 at-%, more preferably from 0.6 to 10.0 at-%, more preferably from 0.7 to 10.0 at-%, more preferably from 0.8 to 10.0 at-%, more preferably from 0.9 to 10.0 at-%, more preferably from 1.0 to 10.0 at-%, more preferably from 1.0 to 9.0 at-%, preferably from 1.0 to 8.0 at-%, more 1.0 to 7.0 at-%, more 1.0 to 6.0 at-%, more 1.0 to 5.0 at-%, more 1.0 to 4.0 at-%, even more 1.0 to 3.0 at-%, most preferably from 1.0 to 2.0 at-%, wherein the preceding content of N is determined by an X-ray photoelectron spectroscopy,
wherein in the process step b) the N is introduced at least into the wall region from the wall surface up to the functionalising depth, wherein in the process a plasma is obtained which comprises the N which in the process step b) is introduced at least into the wall region, wherein in the process step b) the wall surface is contacted with the plasma at least across the surface region. Preferably, after the process step b), the wall surface further has a content of Si of at least 5 at-%, preferably at least 10 at-%, more preferably at least 11 at-%, more preferably at least 12 at-%, even more preferably at least 13 at-%, most preferably at least 14 at-%, wherein in each case the preceding content is determined by the X-ray photoelectron spectroscopy.

Preferably, the functionalising depth is less than the wall thickness in the wall region. Further preferably, the functionalising depth is in a range from 5 nm to 5 µm, more preferably from 5 nm to 3 µm, more preferably from 5 nm to 1 µm, more preferably from 5 to 500 nm, more preferably from 5 to 300 nm, more preferably from 5 to 150 nm, even more preferably from 5 to 100 nm, even more preferably from 5 to 50 nm, most preferably 5 to 20 nm.

In an embodiment 2 of the process 1 according to the invention, the process 1 is designed according to its embodiment 1, wherein the glass of the wall of glass has a glass softening temperature, wherein in the process step b) the wall of glass has a temperature in K of less than 80 %, preferably less than 70 %, more preferably less than 60 %, most preferably less than 50 %, in each case of the glass softening temperature in K.

In an embodiment 3 of the process 1 according to the invention, the process 1 is designed according to its embodiment 1 or 2, wherein in the process step b) the wall of glass has a temperature which is at least 25 K, more preferably at least 100 K, most preferably at least 140 K, less than its glass softening temperature.

In an embodiment 4 of the process 1 according to the invention, the process 1 is designed according to any of its embodiments 1 to 3, wherein in the process step b) the wall of glass has a temperature of less than 400 °C, preferably less than 350 °C, more preferably less than 300 °C, most preferably less than 250 °C.

In an embodiment 5 of the process 1 according to the invention, the process 1 is designed according to any of its embodiments 1 to 4, wherein the plasma is created prior to the process step b), in the process step b), or in a step which overlaps with the process step b).

In an embodiment 6 of the process 1 according to the invention, the process 1 is designed according to its embodiment 5, wherein the plasma has a plasma pressure in a range from 0.1 to 1,000 mbar, preferably from 0.1 to 100 mbar, more preferably from 0.1 to 10 mbar.

In an embodiment 7 of the process 1 according to the invention, the process 1 is designed according to its embodiment 5 or 6, wherein the plasma is obtained from a plasma precursor which comprises nitrogen atoms at a proportion of at least 10 vol.-%, preferably at least 15 vol.-%, more preferably at least 20 vol.-%, most preferably at least 25 vol.-%, in each case based on the volume of the plasma precursor. In an preferred embodiment, the composition comprises the nitrogen atoms at a proportion in a range from 10 to 100 vol.-%, preferably from 20 to 100 vol.-%, more preferably from 30 to 100 vol.-%, more preferably from 40 to 100 vol.-%, more preferably from 50 to 100 vol.-%, more preferably from 60 to 100 vol.-%, more preferably from 70 to 100 vol.-%, even more preferably from 80 to 100 vol.-%, most preferably from 90 to 100 vol.-%, in each case based on the volume of the plasma precursor. In an further preferred embodiment, the composition comprises nitrogen atoms at a proportion in a range from 10 to 100 vol.-%, preferably from 10 to 90 vol.-%, more preferably from 10 to 80 vol.-%, more preferably from 10 to 70 vol.-%, more preferably from 10 to 60 vol.-%, more preferably from 10 to 50 vol.-%, more preferably from 10 to 40 vol.-%, even more preferably from 10 to 35 vol.-%, most preferably from 15 to 35 vol.-%, in each case based on the volume of the plasma precursor. The plasma precursor is preferably a gas. Obtaining the plasma from the plasma precursor preferably comprises irradiating the plasma precursor with electromagnetic waves, or passing an electric current through the plasma precursor, or both. Therein, preferred electromagnetic waves are one selected from the group consisting of electromagnetic waves with frequencies in the microwave range, electromagnetic waves at audio frequencies, and electromagnetic waves at low frequencies, or a combination of at least two thereof. A preferred electromagnetic current is a DC current. A preferred DC current is driven by one selected from the group consisting of a glow discharge, a corona discharge, and an electric arc, or by a combination of at least two thereof.

In an embodiment 8 of the process 1 according to the invention, the process 1 is designed according to its embodiment 7, wherein the plasma precursor further comprises hydrogen atoms at a proportion of more than 0 up to 90 vol.-%, preferably from 5 to 90 vol.-%, more preferably from 10 to 90 vol.-%, more preferably from 20 to 90 vol.-%, more preferably from 30 to 90 vol.-%, more preferably from 40 to 90 vol.-%, more preferably from 50 to 90 vol.-%, more preferably from 60 to 90 vol.-%, even more preferably from 70 to 85 vol.-%, most preferably from 70 to 80 vol.-%, in each case based on the volume of the plasma precursor.

In an embodiment 9 of the process 1 according to the invention, the process 1 is designed according to its embodiment 7 or 8, wherein the plasma precursor comprises an N-comprising compound. A preferred N-comprising compound is one selected from the group consisting of a silazane, ammonia, an amine, a cyanide, and N₂, or a combination of at least two thereof. A preferred silazane is hexamethyldisilazane (HMDS, with the general formula (HN[Si(CH₃)₃]₂). A preferred cyanide is hydrogen cyanide (HCN). A preferred amine is methylamine (CH₅N). Preferably, the plasma precursor additionally comprises H₂.

In an embodiment 10 of the process 1 according to the invention, the process 1 is designed according to any of its embodiments 5 to 9, wherein in the process step b) the contacting with the plasma is conducted for a duration in a range from 1 min to 24 h, preferably from 1 min to 20 h, more preferably from 1 min to 15 h, more preferably from 1 min to 10 h, more preferably from 5 min to 10 h, more preferably from 10 min to 10 h, even more preferably from 0.5 to 10 h, most preferably from 1 to 10 h.

In an embodiment 11 of the process 1 according to the invention, the process 1 is designed according to any of its embodiments 7 to 10, wherein prior to the process step b), or in the process step b), or both the hollow body is positioned in a reaction volume and the plasma precursor flows into the reaction volume at a flow rate in a range from 10 to 1000 sccm per m³ of the reaction volume, preferably from 10 to 600 sccm per m³ of the reaction volume, more preferably from 10 to 500 sccm per m³ of the reaction volume, more preferably from 20 to 400 sccm per m³ of the reaction volume, most preferably from 30 to 300 sccm per m³ of the reaction volume.

Further disclosed is a process, in which in the process step b) the N is introduced at least into the wall region via an ion implantation. Preferably, the ion implantation comprises obtaining N ions from the plasma, further preferably via applying an electrical field; and further preferably accelerating the N ions towards at least the surface region.

In an embodiment 12 of the process 1 according to the invention, the process 1 is designed according to any of its embodiments 1 to 11, wherein prior to the process step b) the X-ray photoelectron spectroscopy of the surface region shows an Si2p-peak at a first binding energy, wherein after the process step b) the X-ray photoelectron spectroscopy of the surface region shows an Si2p-peak at a further binding energy, wherein the further binding energy is less, preferably by at least 0.1 eV, more preferably by at least 0.2 eV, more preferably by at least 0.3 eV, even more preferably by at least 0.4 eV, most preferably by at least 0.5 eV, than the first binding energy.

In an embodiment 13 of the process 1 according to the invention, the process 1 is designed according to any of its embodiments 1 to 12, wherein prior to the process step b) the process comprises a step of at least partially decreasing a contact angle for wetting with water of the wall surface at least in the surface region by a pre-treatment. Preferably, the contact angle for wetting with water is decreased at least at a part of the exterior surface or at least at a part of the interior surface or both, more preferably across the full exterior surface or across the full interior surface or both. In another preferred design of the process, the contact angle for wetting with water is decreased across the full wall surface by the pre-treatment. Further, the contact angle for wetting with water of the at least part of the wall surface is preferably decreased to less than 30°, more preferably less than 20°, most preferably less than 10°.

In an embodiment 14 of the process 1 according to the invention, the process 1 is designed according to its embodiment 13, wherein the pre-treatment is selected from the group consisting of a plasma pre-treatment, a flame pre-treatment, a corona pre-treatment, and a wet chemical pre-treatment; or a combination of at least two thereof. A preferred plasma pre-treatment comprises contacting the wall surface at least in the surface region with a pre-treatment plasma obtained from an O-comprising pre-treatment plasma precursor, or from a corona discharge, or both. In case of a plasma pre-treatment, the pre-treatment plasma is to be distinguished from the plasma which comprises the N which is introduced into at least the wall region in the process step b).

In an embodiment 15 of the process 1 according to the invention, the process 1 is designed according to any of its embodiments 1 to 14, wherein prior to, or during the process step b), or both at least the wall region is heated to a temperature in a range from 25 °C to less than 80 % of the glass softening temperature in °C, preferably from 30 °C to less than 70 % of the glass softening temperature in °C, more preferably from 40 °C to less than 60 % of the glass softening temperature in °C, most preferably from 50 °C to less than 50 % of the glass softening temperature in °C. Preferably, prior to, or during the process step b), or both at least the wall region is heated to a temperature in a range rom 25 to less than 400 °C, preferably from 30 to less than 350 °C, most preferably from 40 to less than 300 °C.

In an embodiment 16 of the process 1 according to the invention, the process 1 is designed according to any of its embodiments 1 to 15, wherein prior to the process step b) the process comprises a step of contacting the wall surface at least in the surface region with a reducing atmosphere. Herein, the reducing atmosphere is an atmosphere which comprises a reaction partner which is capable of undergoing a reducing reaction with the wall surface at least in the surface region. Preferably, the reducing reaction partner comprises H⁺ or is capable of donating H⁺. A preferred reducing atmosphere is a further plasma, referred to herein as pre-treatment plasma. The pre-treatment plasma is preferably different from the plasma with which the wall surface is contacted in the process step b) at least in the surface region. A preferred pre-treatment plasma comprises hydrogen ions at a proportion of in a range from 30 to 100 vol.-%, preferably from 50 to 100 vol.-%, more preferably from 70 to 100 vol.-%, based on the volume of the pre-treatment plasma.

In an embodiment 17 of the process 1 according to the invention, the process 1 is designed according to any of its embodiments 1 to 16, wherein after the process step b) the wall surface is heated at least partially to at least 200 °C, preferably at least 250 °C, more preferably at least 300 °C, most preferably at least 320 °C. The preceding temperature is preferably kept constant for a duration of at least 3 min, preferably at least 5 min, more preferably at least 10 min, even more preferably at least 30 min, most preferably at least 1 h. The preceding duration may be up to several days, preferably 48 h, more preferably 24 h. Preferably, the interior surface or the exterior surface or both, more preferably the full wall surface, is heated as outlined in the preceding. Particularly preferred, the preceding heating is a measure of a depyrogenisation step.

In an embodiment 18 of the process 1 according to the invention, the process 1 is designed according to any of its embodiments 1 to 17, wherein the process step b) comprises adjusting, preferably decreasing, a coefficient of dry sliding friction of the wall surface at least in the surface region to less than 0.4.

In an embodiment 19 of the process 1 according to the invention, the process 1 is designed according to any of its embodiments 1 to 18, wherein in the process step a) the hollow body has a first transmission coefficient for a transmission of light of a wavelength in a range from 400 nm to 2300 nm, preferably from 400 to 500 nm, more preferably from 430 to 490 nm, through the hollow body via the surface region, wherein after the process step b) the hollow body has a further transmission coefficient for a transmission of light of a wavelength in a range from 400 nm to 2300 nm, preferably from 400 to 500 nm, more preferably from 430 to 490 nm, through the hollow body via the surface region, wherein a ratio of the first transmission coefficient to the further transmission coefficient is in a range from 0.95 to 1.05, preferably from 0.99 to 1.01, more preferably from 0.995 to 1.005. Preferably, the first and the further transmission coefficients hold for light of each wavelength in the range from 400 nm to 2300 nm, preferably from 400 to 500 nm, more preferably from 430 to 490 nm.

In an embodiment 20 of the process 1 according to the invention, the process 1 is designed according to any of its embodiments 1 to 19, wherein in the process step a) the hollow body has a first haze for a transmission of light through the hollow body via the surface region, wherein after the process step b) the hollow body has a further haze for a transmission of light through the hollow body via the surface region, wherein the further haze is in a range from 95.0 to 105.0 %, preferably from 99.7 to 100.3 %, more preferably from 99.8 to 100.2 %, more preferably from 99.9 to 100.1 %, most preferably from 100 to less than 100.1 %, in each case of the first haze. Preferably, the above haze values refer to a hollow body having an interior volume of about 2 ml and to a transmission of the light through a part of the hollow body which is of the shape of a hollow cylinder.

Further disclosed is an embodiment 1 of a hollow body 2, obtainable by the process 1 according to any of its embodiments. In a preferred embodiment of the hollow body 2, it shows the technical features of the hollow body 1 of the invention according to any of its embodiments.

A further contribution to solving at least one of the objects according to the invention is made by an embodiment 1 of a closed container comprising a wall of glass which at least partially surrounds an interior volume which comprises a pharmaceutical composition; wherein the wall of glass has a wall surface, which comprises a surface region; wherein in the surface region the wall surface has a content of
a) N in a range from 0.3 to 10.0 at-%, preferably from 0.35 to 10 at-%, more preferably from 0.4 to 10.0 at-%, more preferably from 0.45 to 10.0 at-%, more preferably from 0.5 to 10.0 at-%, more preferably from 0.55 to 10.0 at-%, more preferably from 0.6 to 10.0 at-%, more preferably from 0.7 to 10.0 at-%, more preferably from 0.8 to 10.0 at-%, more preferably from 0.9 to 10.0 at-%, more preferably from 1.0 to 10.0 at-%, more preferably from 1.0 to 9.0 at-%, preferably from 1.0 to 8.0 at-%, more 1.0 to 7.0 at-%, more 1.0 to 6.0 at-%, more 1.0 to 5.0 at-%, more 1.0 to 4.0 at-%, even more 1.0 to 3.0 at-%, most preferably from 1.0 to 2.0 at-%, and
b) Si at least 5 at-%, preferably at least 10 at-%, more preferably at least 11 at-%, more preferably at least 12 at-%, even more preferably at least 13 at-%, most preferably at least 14 at-%,
wherein the preceding contents are determined by an X-ray photoelectron spectroscopy; wherein the wall of glass comprises a wall region, which has the surface region; wherein in the wall region the wall of glass has a content of chemically bound N which is detectable by a time-of-flight secondary ion mass spectrometry (ToF-SIMS); wherein the wall of glass has a wall thickness; wherein in the wall region the wall of glass has the content of chemically bound N throughout a functionalising depth which extends from the wall surface along the wall thickness into the wall of glass; wherein the functionalising depth is in a range from 5 nm to 10 µm. Preferably, the wall of glass of the closed container is designed as the wall of glass of the hollow body 1 according to any of its embodiments. In a preferred embodiment of the closed container, it shows the technical features of the hollow body 1 or 2 of the invention according to any of its embodiments, respectively.

A further contribution to solving at least one of the objects according to the invention is made by an embodiment 1 of a process 2 for making the closed container according to its embodiment 1, the process comprising as process steps
A) providing the hollow body 1 according to any of its embodiments 1 to 28;
B) inserting a pharmaceutical composition into the interior volume; and
C) closing the hollow body.
The closing in the process step C) preferably comprises contacting the hollow body with a closure, preferably a lid, preferably covering an opening of the hollow body with the closure, and joining the closure to the hollow body. The joining preferably comprises creating a form-fit of the hollow body, preferably of the flange of the hollow body, with the closure. The form-fit is preferably created via a crimping step. The process 2 is preferably a process for packaging the pharmaceutical composition.

In an embodiment 2 of the process 2 according to the invention, the process 2 is designed according to its embodiment 1, wherein prior to the process step B) the process further comprises a step of heating the wall surface at least partially to at least 200 °C, preferably at least 250 °C, more preferably at least 300 °C, most preferably at least 320 °C. The preceding temperature is preferably kept constant for a duration of at least 3 min, preferably at least 5 min, more preferably at least 10 min, even more preferably at least 30 min, most preferably at least 1 h. The preceding duration may be up to several days, preferably 48 h, more preferably 24 h. Preferably, the interior surface or the exterior surface or both, more preferably the full wall surface, is heated as outlined in the preceding. Particularly preferably, the heating is a measure of a depyrogenisation step.

Further disclosed is an embodiment 1 of a closed hollow body, obtainable by the process 2 according to any of its embodiments.

A further contribution to the disclosure is made by an embodiment 1 of a process 3 comprising as process steps
A. providing the hollow body 1 according its embodiment 29, the closed container according to any of its embodiments, or the closed hollow body according to any of its embodiments; and
B. administering the pharmaceutical composition to a patient.

A further contribution to solving at least one of the objects according to the invention is made by an embodiment 1 of a use 1 of the hollow body 1 according to any of its embodiments 1 to 28 for packaging a pharmaceutical composition. The packaging preferably comprises inserting the pharmaceutical composition into the interior volume and closing the hollow body.

A further contribution to the disclosure is made by an embodiment 1 of a use 2 of a composition, comprising N, for introducing the N at least into a wall region of a wall of glass of a container, thereby adjusting a content of N of a wall surface of the wall of glass at least in a surface region of the wall surface to be in a range from 0.3 to 10.0 at-%, preferably from 0.35 to 10 at-%, more preferably from 0.4 to 10.0 at-%, more preferably from 0.45 to 10.0 at-%, more preferably from 0.5 to 10.0 at-%, more preferably from 0.55 to 10.0 at-%, more preferably from 0.6 to 10.0 at-%, more preferably from 0.7 to 10.0 at-%, more preferably from 0.8 to 10.0 at-%, more preferably from 0.9 to 10.0 at-%, more preferably from 1.0 to 10.0 at-%, more preferably from 1.0 to 9.0 at-%, preferably from 1.0 to 8.0 at-%, more 1.0 to 7.0 at-%, more 1.0 to 6.0 at-%, more 1.0 to 5.0 at-%, more 1.0 to 4.0 at-%, even more 1.0 to 3.0 at-%, most preferably from 1.0 to 2.0 at-%, wherein the preceding content of N is determined by an X-ray photoelectron spectroscopy; wherein the wall of glass at least partially surrounds an interior volume of the hollow body. The composition is preferably configured as the plasma precursor of the process 1 of the invention according to any of its embodiments. Further preferably, the adjusting is conducted in accordance with the process 1 of the invention according to any of its embodiments, particularly preferred in accordance with the process step b). Further preferably, the wall of glass is configured as the wall of glass of the hollow body 1 of the invention according to any of its embodiments.

In an embodiment 2 of the use 2, the use 2 is designed according to its embodiment 1, wherein a plasma is obtained from the composition and contacted with the wall surface at least across the surface region.

In an embodiment 3 of the use 2, the use 2 is designed according to its embodiment 1, wherein a plasma, comprising the N, is obtained from the composition and the N is introduced at least into a wall region via an ion implantation.

In an embodiment 4 of the use 2, the use 2 is designed according to any of its embodiments 1 to 3, wherein the glass of the wall of glass has a glass softening temperature, wherein while the N is introduced at least into a wall region the wall of glass has a temperature of less than 80 %, preferably less than 70 %, more preferably less than 60 %, most preferably less than 50 %, in each case of the glass softening temperature. Alternatively preferable, while the N is introduced at least into a wall region the wall of glass has a temperature as specified in the context of the process step b) of the process 1 according to the invention.

Features described as preferred in one category of the invention, for example according to the hollow body 1, are analogously preferred in an embodiment of the other categories according to the invention, for example in an embodiment of the process 1 according to the invention.

### Elemental contents of the wall of glass

According to the invention, the wall of glass is characterised at least in the surface region of the wall surface by contents of different chemical elements in at-%. The corresponding elemental analysis is conducted via an X-ray photoelectron spectroscopy as described herein. The chemical elements are referred to by their abbreviations as provided in the periodic table of elements. The elemental contents determined by XPS provided herein refer to the wall of glass itself, not to any optional coating or functionalisation which may superimpose the wall of glass. Thus, the content of N is a content in the wall of glass at least in the wall region. This content is determined by conducting XPS at the surface region which is a region of the surface of the wall of glass itself, i.e. a glass surface. Preferably, the N of the content of N is chemically bound in the wall of glass via SiN-bonds.

### Surface region

Preferably, each surface region is a coherent region. In other words, the surface regions is preferably not a discontinuous region. Herein, a discontinuous region is a region which comprises multiple mutually spaced regions.

### Hollow body

The hollow body according to the invention may have any size or shape which the skilled person deems appropriate in the context of the invention. Preferably, the head region of the hollow body comprises an opening, which allows for inserting a pharmaceutical composition into the interior volume of the hollow body. In that case, the wall of glass surrounds the interior volume of the hollow body only partially. The hollow body is preferably a glass body or a glass container. Preferably, the wall of glass is of a one-piece design. The wall of glass of such a glass body or a glass container may preferably be made by blow moulding a glass melt; or by preparing a tube of a glass, preferably in form of a hollow cylinder, forming the bottom of the hollow body from one end of the tube, thereby closing the tube at this end, and forming the head region of the hollow body from the opposite end of the tube. Preferably, the wall of glass is transparent.

For the use in this document, the interior volume represents the full volume of the interior of the hollow body. This volume may be determined by filling the interior of the hollow body with water up to the brim and measuring the volume of the amount of water which the interior can take up to the brim. Hence, the interior volume as used herein is not a nominal volume as it is often referred to in the technical field of pharmacy. This nominal volume may for example be less than the interior volume by a factor of about 0.5.

### Glass

The wall of glass comprises a glass, more preferably essentially consists of the glass. This glass may be any type of glass and may have any composition which the skilled person deems suitable in the context of the invention. Preferably, the glass is suitable for pharmaceutical packaging. Particularly preferable, the glass is of type I in accordance with the definitions of glass types in section 3.2.1 of the European Pharmacopoeia, 7th edition from 2011. Additionally or alternatively preferable to the preceding, the glass is selected from the group consisting of a borosilicate glass, an aluminosilicate glass, and fused silica; or a combination of at least two thereof, wherein an aluminosilicate glass is particularly preferred. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred according to the invention is essentially free from B. Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass.

### Depyrogenisation

In a preferred embodiment of the process 1, after the process step b) the wall surface is heated at least partially to at least 200 °C, preferably at least 250 °C, more preferably at least 300 °C, most preferably at least 320 °C. Particularly preferably, this heating is a measure of a depyrogenisation step. In the technical field of pharmacy, depyrogenisation is a step of decreasing an amount of pyrogenic germs on a surface, preferably via a heat-treatment. Therein, the amount of pyrogenic germs on the surface is preferably decreased as much as possible, preferably by at least 80 %, more preferably at least 90 %, more preferably at least 95 %, even more preferably at least 99 %, even more preferably at least 99.5 %, most preferably by 100 %, in each case based on an amount of the pyrogenic germs on the surface prior to the depyrogenisation.

### Pharmaceutical composition

In the context of the invention, every pharmaceutical composition which the skilled person deems suitable comes into consideration. A pharmaceutical composition is a composition comprising at least one active ingredient. A preferred active ingredient is a vaccine. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a parenterialium, i.e. a composition which is intended to be administered via the parenteral route, which may be any route which is not enteral. Parenteral administration can be performed by injection, e.g. using a needle (usually a hypodermic needle) and a syringe, or by the insertion of an indwelling catheter.

### Wall

Herein, the hollow body comprises a wall of glass. The hollow body may comprise further layers of materials which superimpose the wall of glass fully or partially on one or both sides of the wall of glass. In any case, however, the wall surface with the surface region refers to the wall of glass, i.e. these are surfaces of the wall of glass itself, hence glass surfaces. If the hollow body comprises one or more layers which are superimposed to the wall of glass, these layers are joined to one another and to the wall of glass. Two layers are joined to one another when their adhesion to one another goes beyond Van-der-Waals attraction forces. Unless otherwise indicated, layers may follow one another in a direction of a thickness of the wall of glass indirectly, in other words with one or at least two intermediate components, or directly, in other words without any intermediate component. This is particularly the case with the formulation wherein one layer superimposes another. Further, if a component is superimposed onto a layer or a surface, this component may be contacted with that layer or surface or it may not be contacted with that layer or surface, but be indirectly overlaid onto that layer or surface with another component (e.g. a layer) in-between.

### Alkali metal barrier layer and hydrophobic layer

Preferably, the wall of glass of the hollow body is superimposed by an alkali metal barrier layer or by a hydrophobic layer or both, in each case towards the interior volume of the hollow body, preferably across at least a part of the interior surface, more preferably the full interior surface of the wall of glass. The alkali metal barrier layer may consist of any material or any combination of materials which the skilled person deems suitable for providing a barrier action against migration of an alkali metal ion, preferably against any alkali metal ion. The alkali metal barrier layer may be of a multilayer structure. Preferably, the alkali metal barrier layer comprises SiO₂, preferably a layer of SiO₂. Further, the hydrophobic layer may consist of any material or any combination of materials which provides a layer surface towards the interior volume which has a contact angle for wetting with water of more than 90°. The hydrophobic layer preferably allows for the formation of a well-defined cake upon freeze-drying, in particular in terms of a shape of the cake. A preferred hydrophobic layer comprises a compound of the general formula SiOₓC_{y}H_{z}, preferably a layer of this compound. Therein, x is a number which is less than 1, preferably in a range from 0.6 to 0.9, more preferably from 0.7 to 0.8; y is a number in a range from 1.2 to 3.3, preferably from 1.5 to 2.5; and z is a number as well.

### MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50 %.

### Contact angle for wetting with water

The contact angle of a surface for wetting with water is determined in accordance with the standard DIN 55660, parts 1 and 2. The contact angle is determined using the static method. Deviating from the standard, the measurement is conducted at curved surfaces as the wall of the hollow body is usually curved. Further, the measurements are conducted at 22 to 25 °C ambient temperature and 20 to 35 % relative atmospheric humidity. A Drop Shape Analyzer - DSA30S from Krüss GmbH is applied for the measurements. Uncertainty of the measurement increases for contact angles below 10°.

### Wall thickness and tolerance of wall thickness

The wall thickness and deviations from the mean value of the wall thickness (tolerance) are determined in accordance with the following standards for the respective type of hollow body:
DIN ISO 8362-1 for vials,
DIN ISO 9187-1 for ampoules,
DIN ISO 110 4 0- 4 for syringes,
DIN ISO 13926-1 for cylindrical cartridges, and
DIN ISO 11040-1 for dental cartridges.

### Transmission coefficient

Herein, the transmission coefficients are defined as T = Iₜᵣₐₙₛ / I₀, wherein I₀ is the intensity of the light which is incident at a right angle on an incidence region of the surface region and Iₜᵣₐₙₛ is the intensity of the light which leaves the hollow body on a side of the hollow body which is opposite to the incidence region. Hence, T refers to light which transmits the empty hollow body completely, i.e. one time through the wall into the empty interior volume and from there a second time through the wall out of the interior volume. Hence, the light transmits through two curved sections of the wall of the hollow body. The transmission coefficient is determined in accordance with the standard ISO 15368:2001(E), wherein an area of measurement of the dimensions 3 mm × 4 mm is used. Further, the light is incident on the hollow body at a right angle to the vertical extension of the exterior surface of the hollow body. Preferably, the transmission coefficients herein refer to a hollow body of the type 2R according to DIN/ISO 8362 and to a transmission of the light through a part of the hollow body which is of the shape of a hollow cylinder. In case the transmission coefficient for a transmission of light via an unfunctionalised surface of a hollow body (herein also referred to as first transmission coefficient) is to be determined and the hollow body does not have any unfunctionalised surface which is suitable for the measurement, the functionalisation (e.g. particles) is removed first and then the transmission coefficient via the surface from which the functionalisation has been removed is determined.

### Haze

The haze is a measure for the light scattering properties of a transparent sample, such as a glass sample. The value of the haze represents the fraction of light which has been transmitted through the sample, here the empty container, and which is scattered out of a certain spatial angle around the optical axis. Thus, the haze quantifies material defects in the sample which negatively affect transparency. Herein, the haze is determined according to the standard ASTM D 1033. In accordance with this standard, 4 spectra are measured and for each of them the transmission coefficient is calculated. The haze value in % is calculated from these coefficients of transmission. A Thermo Scientific Evolution 600 spectrometer with integrating sphere and the software OptLab-SPX are applied for the measurements. In order to allow for measuring the diffusive transmission, the sample is positioned in front of the entrance of the integrating sphere. The reflection opening is left empty such that only the transmitted and scattered fraction of the incident light is detected. The fraction of the transmitted light which is not sufficiently scattered is not detected. Further measurements pertain to detection of the scattered light in the sphere (without sample) and to the overall transmission of the sample (reflection opening closed). All the measurement results are normalised to the overall transmission of the sphere without sample which is implemented as obligatory baseline correction in the software. Herein, the haze refers to light which transmits the hollow body completely, i.e. one time through the wall into the interior volume and from there a second time through the wall out of the interior volume. Hence, the light transmits through two curved sections of the wall of the hollow body. Further, the light is incident on the hollow body at a right angle to the vertical extension of the exterior surface of the hollow body. The hollow body, preferably, is a vial of the type 2R according to DIN/ISO 8362 and the transmission is conducted through a part of the hollow body which is of the shape of a hollow cylinder. In case the haze for a transmission of light via an unfunctionalised surface of a hollow body (herein also referred to as first haze) is to be determined and the hollow body does not have any unfunctionalised surface which is suitable for the measurement, the functionalisation (e.g. particles) is removed first and then the haze via the surface from which the functionalisation has been removed is determined.

### Scratch test and coefficient of dry sliding friction

An MCT MikroCombiTester (MCT S/N 01-04488) from CSM Instruments is applied for the scratch test and for measuring the coefficient of dry friction. As the friction partner, a hollow body which is identical to the hollow body to be tested, including any coatings or functionalisations, is used. Further, in the test same surfaces are scratched / slide against each other. The friction partner is hold in position by a special mount above the hollow body to be tested. Here, the friction partner and the hollow body to be tested incline an angle of 90° in a top view. For both measurements, the hollow body to be tested is moved forwards, thereby scratching over the surface of the friction partner at a well-defined normal force (test force). For both tests, the hollow body to be measured is moved forwards underneath the friction partner at a velocity of 10 mm/min over a test length of 15 mm. In case of the scratch test, the test force is progressively increased from 0 to 30 N (load rate 19.99 N/min) across the test length. Afterwards, the scratched surface is checked with a microscope at a magnification of 5 times. In case of measuring the coefficient of dry sliding friction, a constant normal force of 0.5 N is applied. The lateral friction force is measured using the friction measuring table. The coefficient of dry friction is determined from the measured curves as the ratio of friction force to normal force (test force), wherein only values after the initial 0.2 mm up to the full test length of 15 mm are considered, in order to minimise the influence of the static friction.

### Softening temperature

The softening temperature of a glass is defined as the temperature of the glass at which the glass has a viscosity η in dPa s (= Poise) such that log₁₀(η) = 7.6. The softening temperature is determined in accordance with ISO 7884-3.

### Washing process

A HAMO LS 2000 washing machine is applied for the washing procedure. The HAMO LS 2000 is connected to the purified water supply. Further, the following devices are used.
cage 1: 144 with 4 mm nozzles
cage 2: 252 with 4 mm nozzles
drying cabinet from Heraeus (adjustable up to 300 °C)

The tap is opened. Then the machine is started via the main switch. After conducting an internal check, the washing machine shows to be ready on the display. Program 47 is a standard cleaning-program which operates with the following parameters:
pre-washing without heating for 2 min
washing at 40 °C for 6 min
pre-rinsing without heating for 5 min
rinsing without heating for 10 min
end-rinsing at without heating for 10 min
drying without heating for 5 min

The holder for the vials in the cages 1 and 2 have to be adjusted considering the size of the vials in order to obtain a distance of the nozzle of about 1.5 cm. The vials to be washed are placed on the nozzles with the head first. Subsequently, the stainless steel mesh is fixed on the cage. The cage is oriented to the left and pushed into the machine. Then the machine is closed. Program 47 (GLAS040102) is selected and then the HAMO is started via START. After the program has finished (1 h), the cages are taken out and the vials are placed with their opening facing downwards in drying cages. A convection drying cabinet with ambient air filter is applied for the drying. The drying cabinet is adjusted to 300 °C. The vials are placed into the drying cabinet for 20 min. After the vials have cooled down, they are sorted into appropriate boxes.

### X-ray photoelectron spectroscopy (XPS)

Prior to the XPS-measurement, the hollow body to be studied is washed. In case of a vial as the hollow body, the above washing process is applied, otherwise a suitable analogue washing process is applied. The XPS-studies are conducted on the washed hollow body. Any contamination of the hollow body after the washing process is to be avoided. The X-ray photoelectron spectroscopy measurements are performed using a PHI Quantera SXM system. For data acquisition, the software SmartSoft-XPS V3.6.2.7 is used. For the XPS-measurement, the excitation is carried out with a monochromatic Al-kα source (1486.6 eV / 15 kV) with 200 µm spot size. The electrons are detected under an angle to the normal of 45°. The built-in charge compensation system is employed during analysis, using electrons and low-energy argon ions to prevent charging of the sample. The pressure inside the measurement chamber is 1.5·10⁻⁶ Pa during measurement, and pass energies of 55 eV (high resolution spectra) and 140 eV (survey spectra) are used. For data processing the software MultiPak V9.5.0.8 is used. A so-called Shirley background is applied to fit the background of all spectra. For quantification the sensitivity factors as implemented in the software MultiPak (based on C.D. Wagner et al. in Surface and Interfaces Analysis, 3 (1981) 211) and the analyser transmission function are applied. All spectra are referenced to the C 1s-peak of hydrocarbon at 285.0 eV binding energy and controlled by means of the well-known photoelectron peaks of metallic Cu, Ag, and Au.

### Time-of-flight secondary ion mass spectrometry (ToF-SIMS)

Prior to the ToF-SIMS-measurement, the hollow body to be studied is washed. In case of a vial as the hollow body, the above washing process is applied, otherwise a suitable analogue washing process is applied. The ToF-SIMS -studies are conducted on the washed hollow body. Any contamination of the hollow body after the washing process is to be avoided. ToF-SIMS depth profiles are performed using a TOF-SIMS IV-100, company ION-TOF GmbH equipped with 25 keV Ga+ primary ions. The analysis is performed on an area of 50 × 50 µm² with a primary ion current of approximately 1.0 pA. The sputter treatment is performed in alternating mode by a Cs+ sputter ion gun on an area of 300 × 300 µm² with an energy of 0.5 keV and a sputter current of approximately 40 nA. For charge compensation an electron flood gun is used. Negatively charged ions are analysed and - for better standardisation - the detected intensities are normalised to the Si- ion intensities. For data processing the software SurfaceLab 6.7 is used.

The invention is set out in more detail below by means of examples and drawings, with the examples and drawings not denoting any restriction on the invention. Furthermore, unless otherwise indicated, the drawings are not to scale.

### Examples 1 to 3 (Example 1 not according to the invention, Examples 2 and 3 according to the invention

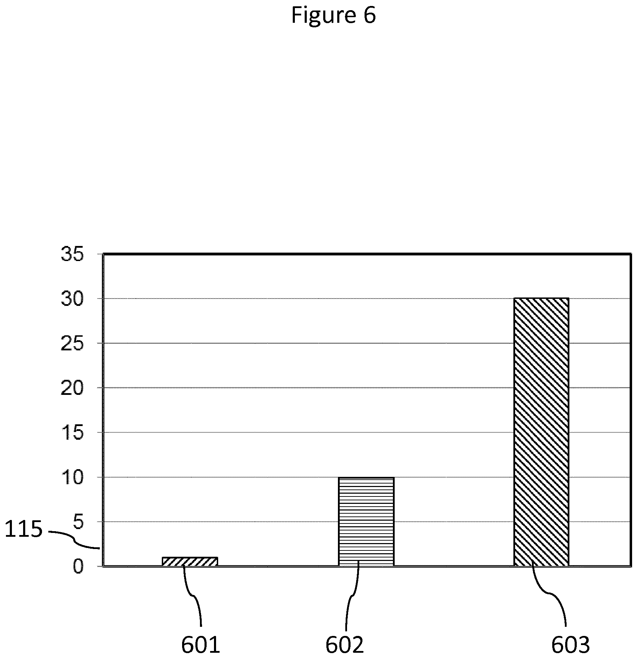

For each of the examples 1 to 3, commercially available glass vials of the type "Vial 2.00 ml Fiolax clear" from Schott AG, which are further of the type 2R according to DIN/ISO 8362, are provided. These vials are washed as described above in the measurement methods section. In each example, the vials are treated with a plasma which is created from a gas of NH₃ (100 vol-%). The vials are placed in a reactor of the type Diener Nano (PlasmaCoat Express) which is commercially available from Diener Electronics. The reactor has a volume of 17 dm³ and consists of a quartz glass tube. The plasma precursor gas is introduced into the reactor at the flow rate provided in table 1 below. In the reactor, a plasma is created from the gas via radio frequency (RF) at 13.56 MHz at a power of 600 W. The created plasma contains nitrogen atoms and ions and contacts the vials in the reactor across their full glass surface. For each of the examples, the plasma treatment is conducted for the duration of treatment provided in the table 1 below. Thereby, N is implanted into the glass walls of the vials. The depth, measured from the outer surface of the vial, up to which N is implanted into the glass wall is shown for vials of the examples 1 to 3 in figure 6. After the plasma treatment, the RF-generator is shut off and the vials are taken from the reactor.

**Table 1: Parameters of the plasma treatment according to the examples 1 to 3**

| | **Flow rate of the plasma precursor gas [sccm per m³ reaction volume]** | **Duration of plasma treatment [h]** |
|---|---|---|
| Example 1 | 300 | 6 |
| Example 2 | 300 | 8 |
| Example 3 | 30 | 8 |

### Comparative Example 1 (not according to the invention)

A commercially available glass vial of the type "Vial 2.00 ml Fiolax clear" from Schott AG, which of the type 2R according to DIN/ISO 8362, is provided as a reference. The surface of this vial does not have any coating or functionalisation. Prior to any measurement, the vial is washed.

### Comparative Example 2 (not according to the invention)

A commercially available glass vial of the type "Vial 2.00 ml Fiolax clear" from Schott AG, which is further of the type 2R according to DIN/ISO 8362, and which has been washed as described below is coated on its exterior surface with MED10-6670 from NuSiL. The coated vial is dried for 10 min at 350 °C in an oven. No plasma treatment is applied.

### Evaluation

XPS-measurements are conducted as described above on the exterior surfaces of the vials of the examples 1 to 3 and the comparative example 1. The vials of the comparative example 2 have glass bodies which are identical to the reference vials of the comparative example 1, however, with a coating on top. Therefore, the elemental contents of the glass bodies of the vials of comparative example 2 can be assumed to be identical to those of the comparative example 1. The elemental contents as determined are presented in the table 2 below.

**Table 2: Elemental contents as determined by the XPS-measurements conducted on the vials of the examples 1 to 3 and the reference vial of the comparative example 1**

| | **Content of [at-%]** | | | | | |
|---|---|---|---|---|---|---|
| | **N** | **Si** | **O** | **C** | **alkali metals** | **B** |
| Example 1 | 0.4 | 22.1 | 53.4 | 12.5 | 3.3 | 1.9 |
| Example 2 | 0.6 | 21.1 | 53.7 | 3.9 | 6.3 | 1.8 |
| Example 3 | 1.45 | 14.4 | 55.6 | 8.4 | 0 | 0.6 |
| Comparative Example 1 | 0.25 | 24.0 | 61.8 | 7.4 | 2.85 | 1.8 |

The detection threshold of the XPS-measurements for N is at about 0.2 at-%. Accordingly, essentially no N is measured in case of the comparative example 1. This finding is in line with scientific reports (G. Iucci et al., Solid State Sciences 12, 1861-1865 (2010); G. Kaklamani et al., Materials Letters, 111, 225-229 (2013); D. Ditter et al., European Journal of Pharmaceutics and Biopharmaceutics 125 (2018) 58-67) according to which essentially no N is measured via XPS at uncontaminated glass surfaces of the prior art, in particular at the outer glass surfaces of pharmaceutical containers of the prior art.

Further, the binding energies reported in table 3 below are determined via XPS as descirbed in the measurement methods section.

**Table 3: Binding energies as determined by the XPS-measurements conducted on the vials of the examples 1 to 3 and the reference vial of the comparative example 1**

| | **Si2p binding energy [eV]** | **N1s binding energy [eV]** |
|---|---|---|
| Example 1 | 103.3 | 402.5 |
| Example 2 | 103.1 | 402.5 |
| Example 3 | 102.9 | 403.0 |
| Comparative example 1 | 103.2 | 402.0 |

Further, for each of the examples 1 to 3 and the comparative examples 1 and 2, the coefficient of dry sliding friction is determined on the exterior surface of the vial body in accordance with the above measurement method. The results are shown in table 3.

**Table 4: Coefficients of dry sliding friction of the exterior surfaces of the vials of the examples 1 to 3 and the comparative examples**

| | **Coefficient of dry sliding friction** |
|---|---|
| Example 1 | 0.36 |
| Example 2 | 0.37 |
| Example 3 | 0.18 |
| Comparative example 1 | 0.5 |
| Comparative example 2 | 0.28 |

Further, 10,000 of the vials of each example and comparative example, respectively, are processed on a standard pharmaceutical filling line and thus, filled with an influenza vaccine. Table 4 below shows an evaluation of the vials regarding their tendency to be damaged or even break on the filling line. Here, ++ means that no or only very few vials are being damaged or broken, + means that few vials are being damaged or broken, - means that damages to vials and broken vials occur more often than for +, -- means that damages to vials and broken vials occur more often than for -.

**Table 5: Comparison of the tendency of the glass vials to be damaged on the filling line and the maximum temperature of the vials during the above described treatment for the examples 1 to 3 and the comparative examples 1 and 2**

| | **Low tendency to damages on filling line** |
|---|---|
| Example 1 | + |
| Example 2 | + |
| Example 3 | ++ |
| Comparative example 1 | - |
| Comparative example 2 | + |

It can be seen from the results presented in the above tables 4 and 5 that vials of the examples 1 to 3 are superior to the untreated reference vials of comparative example 1. Further, the inventive examples 1 to 3 include no coating of the glass vials, whereas the vials of comparative example 2 are provided with a silicone coating. Silicone, however, is often not completely and securely bonded to the glass surface of the vial. Therefore, the silicone tends to creep across the glass surface. This bears a risk of contamination of the inner surface of the vial. Such contamination is inacceptable for pharmaceutical containers. Even more, contamination with an organic composition such as the silicone coating of the comparative example 2 is particularly undesirable. Further, vials having a silicone coating cannot be labelled as easy as vials without such a coating. If a standard adhesive is used, the label often does not sufficiently adhere to the coated vial. If, however, a special adhesive is used which provides better adhesion of the label to the coated vial, the special adhesive partly softens the silicone coating which then tends to creep even more. In consequence, the risk of contamination is increased even more. It follows that a silicone coating such as the one applied in the comparative example 2 is particularly undesirable to be applied to pharmaceutical containers.

Further, vials which have been filled with a pharmaceutical composition and closed typically have to be inspected, in particular for pharmaceutically relevant particles. This is usually done by optical methods which call for a high transparency and low haze of the vials. Here, prior to filling them, vials of the examples and comparative examples are studied for their optical characteristics which may influence an optical inspection of the vials. The increase of the haze by the above described treatments and the transmission coefficient of the vials are determined in accordance with the above measurement methods. The results of the haze measurements are provided in the table 6 below. The increase of the haze by the treatment of vial with respect to the untreated vial which corresponds to comparative example 1 is shown.

**Table 6: Increase of the haze of the vials of the examples and the comparative examples**

| | **Increase of haze [%]** |
|---|---|
| Example 1 | < 0.3 |
| Example 2 | < 0.3 |
| Example 3 | < 0.3 |
| Comparative example 1 | / |
| Comparative example 2 | 6 |

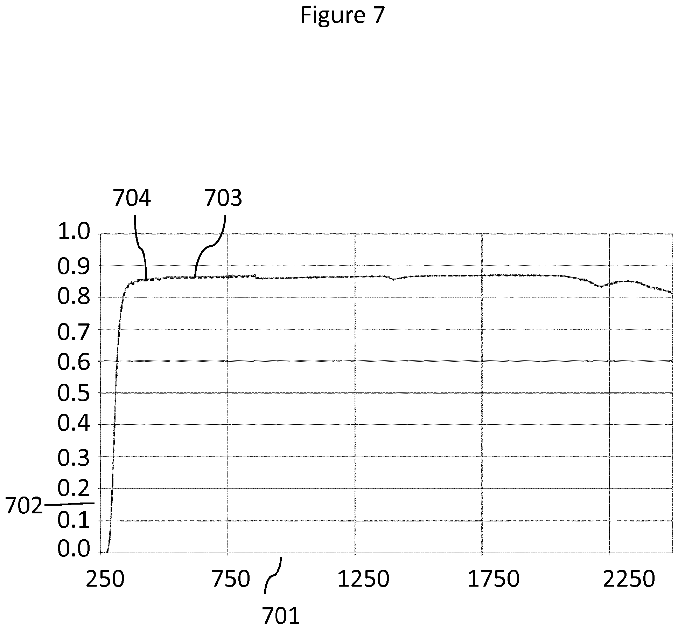

Results of the transmission coefficient measurements on vials of the examples 1 to 3 and the reference vial of the comparative example 1 are shown in figure 7. From this figure, it can clearly be seen that the plasma treatment according to the examples 1 to 3 does not significantly deteriorate the transmission coefficient in the studied spectral range. Therefore, the vials of the inventive examples are very well suited for being optically inspected.

Unless otherwise specified in the description or the particular figure:
- Figure 1: shows a schematic depiction of a hollow body;
- Figure 2: shows a schematic depiction of a closed hollow body;
- Figure 3: shows a flow chart of a process for the preparation of a hollow body;
- Figure 4: shows a flow chart of a process for packaging a pharmaceutical composition;
- Figure 5: shows a flow chart of a process for treating a patient;
- Figure 6: shows results of measurements of the functionalising depth of vials of the examples 1 to 3; and
- Figure 7: shows results of measurements of the transmission coefficient of vials according to the examples 1 to 4 and the comparative example 1.

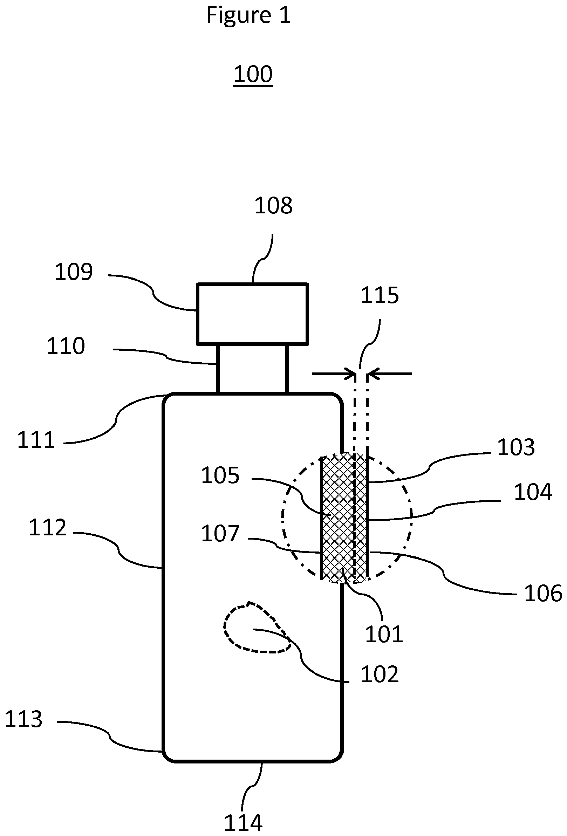

Figure 1 shows a schematic depiction of a hollow body 100. The hollow body 100 comprises a wall of glass 101 which partially surrounds an interior volume 102 of the hollow body 100. The wall of glass 101 surrounds the interior volume 102 only partially in that the hollow body 100 comprises an opening 108 which allows for filling the hollow body 100 with a pharmaceutical composition 201 (not shown). Further, the wall of glass 101 has a wall surface 103, which consists of an interior surface 107 which faces the interior volume 102, and an exterior surface 106 which faces away from the interior volume 102. The wall of glass 101 forms from top to bottom in the figure 1: a top region of the hollow body 100, which consists of a flange 109 and a neck 110; a body region 112, which follows the top region via a shoulder 111; and a bottom region 114, which follows the body region 112 via a heel 113. Here, the body region 112 is a lateral region of the hollow body 100 in form of a hollow cylinder. The hollow body 100 of figure 1 is a vial which has been treated according to the example 1 above. The exterior surface 106 forms a surface region 104 of the wall surface 103 according to the nomenclature used herein. Thus, the exterior surface 106 has the contents of N, Si, O and C measured by XPS as reported above. Here, the N has been implanted into the wall of glass 101 by the process described above for example 2 from the exterior surface 106 up to a functionalising depth 115 into the wall of glass 101. It can be seen from figure 6 that the functionalising depth 115 is 10 nm.

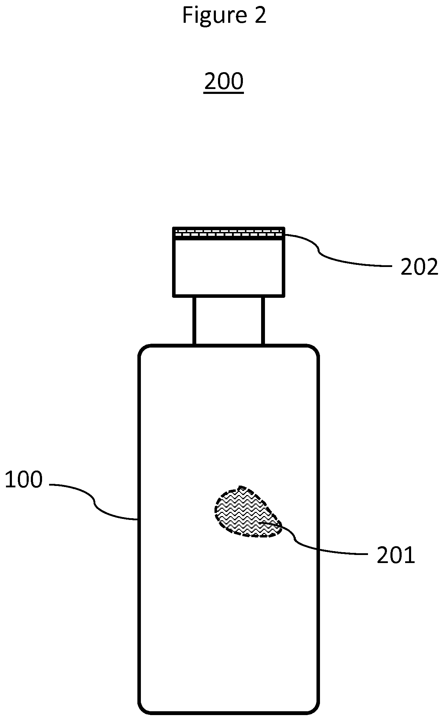

Figure 2 shows a schematic depiction of a closed hollow body 200. This closed hollow body 200 is a vial which has been obtained by filling the hollow body 100 of figure 1 with a pharmaceutical composition 201 and closing the opening 108 with a lid 202 via a crimping step. Here, the pharmaceutical composition 201 is a vaccine.

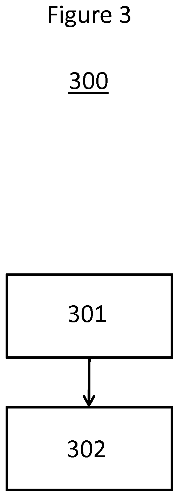

Figure 3 shows a flow chart of a process 300 for the preparation of a hollow body 100. The process 300 comprises a process step a) 301 in which a commercially available glass vial of the type "Vial 2.00 ml Fiolax clear" from Schott AG which of the type 2R according to DIN/ISO 8362 is provided. In a process step b) 302, N is introduced into the wall of glass 101 by a plasma treatment of the exterior surface 106 as described in detail above in the context of the example 1. The hollow body 100 of figure 1 is obtained through the process 300.

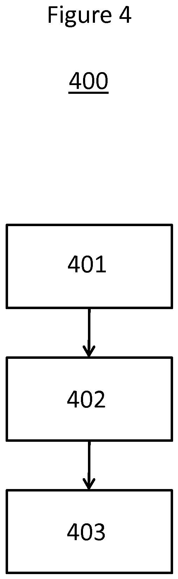

Figure 4 shows a flow chart of a process 400 for packaging a pharmaceutical composition 201. In a process step A) 401, the hollow body 100 according to figure 1 is provided. In a process step B) 402, a pharmaceutical composition 201 is filled into the interior volume 102 of the hollow body 100, and in a process step C) 403 the opening 108 of the hollow body 100 is closed, thereby obtaining the closed hollow body 200 of figure 2.

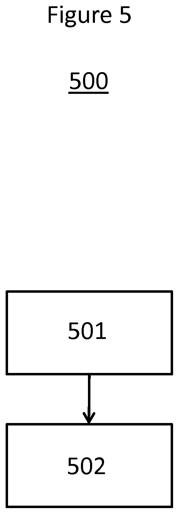

Figure 5 shows a flow chart of a process 500 for treating a patient. This process 500 comprises the process steps of: A. 501 providing the closed hollow body 200 of figure 2, opening the closed hollow body 200 by penetrating the lid 202 with a needle of a syringe, filling the syringe with the vaccine; and B. 502 administering the vaccine subcutaneously to a patient using the syringe.

Figure 6 shows results of measurements of the functionalising depth 115 in nm of vials of the examples 1 to 3. The bar 601 denotes the results for the example 1, 602 the results for example 2, and 603 the results for example 3. The results presented in figure 6 have been determined by ToF-SIMS as described above in the measurement methods section.

Figure 7 shows results of measurements of the transmission coefficient 702 of vials according to the examples 1 to 4 and the comparative example 1 over the wavelength in nm 701. In the diagram, 703 denotes the measurement results for the examples 1 to 4 and 704 the results for the comparative example 1. All these results are so close to each other that the corresponding graphs appear essentially as one in the diagram. The dip at 865 nm is a measurement artefact.

### LIST OF REFERENCE NUMERALS

- **100**: hollow body
- **101**: wall of glass
- **102**: interior volume
- **103**: wall surface
- **104**: surface region
- **105**: wall region
- **106**: exterior surface
- **107**: interior surface
- **108**: opening
- **109**: flange
- **110**: neck
- **111**: shoulder
- **112**: body region
- **113**: heel
- **114**: bottom region
- **115**: functionalising depth
- **200**: closed container / closed hollow body
- **201**: pharmaceutical composition
- **202**: lid
- **300**: process for the preparation of a hollow body
- **301**: process step a)
- **302**: process step b)
- **400**: process for packaging a pharmaceutical composition
- **401**: process step A)
- **402**: process step B)
- **403**: process step C)
- **500**: process for treating a patient
- **501**: process step A.
- **502**: process step B.
- **601**: measurement results for example 1
- **602**: measurement results for example 2
- **603**: measurement results for example 3
- **701**: wavelength in nm
- **702**: transmission coefficient
- **703**: measurement results for examples 1 to 4
- **704**: measurement results for comparative example 1

## Claims

1. A hollow body (100), comprising a wall of glass (101) which at least partially surrounds an interior volume (102) of the hollow body (100);
wherein the wall of glass (101) has a wall surface (103), which comprises a surface region (104);
wherein at least in the surface region (104) the wall surface (103) has a content of
a) N in a range from 0.3 to 10.0 at-%, and
b) Si at least 5 at-%,
wherein the preceding contents are determined by an X-ray photoelectron spectroscopy;
wherein the wall of glass (101) comprises a wall region (105), which has the surface region (104);
wherein in the wall region (105) the wall of glass (101) has a content of chemically bound N which is detectable by a time-of-flight secondary ion mass spectrometry;
wherein the wall of glass (101) has a wall thickness;
wherein in the wall region (105) the wall of glass (101) has the content of chemically bound N throughout a functionalising depth (115) which extends from the wall surface (103) along the wall thickness into the wall of glass (101);
wherein the functionalising depth (115) is in a range from 5 nm to 10 µm.

2. The hollow body (100) according to claim 1, wherein in the surface region (104) the wall surface (103) further has a content of O in a range from 35 to 70 at-%,
wherein the content of O is determined by the X-ray photoelectron spectroscopy.

3. The hollow body (100) according to claim 1 or 2, wherein in the surface region (104) the wall surface (103) further has content of C of less than 20 at-%,
wherein the content of carbon atoms is determined by the X-ray photoelectron spectroscopy.

4. The hollow body (100) according to any of the preceding claims, wherein the X-ray photoelectron spectroscopy of the surface region (104) shows an N1s-peak at a binding energy in a range from 397.5 to 405.0 eV.

5. A process (300) for making the hollow body (100) according to any of the preceding claims, the process (300) comprising as process steps
a) providing a hollow body, comprising a wall of glass (101),
wherein the wall of glass (101)
i) at least partially surrounds an interior volume (102) of the hollow body,
ii) has a wall surface (103), which comprises a surface region (104),
iii) comprises a wall region (105), which has the surface region (104); and
b) introducing N at least into the wall region (105), thereby obtaining a content of N of the wall surface (103) at least in the surface region (104) in a range from 0.3 to 10.0 at-%, wherein the preceding content of N is determined by an X-ray photoelectron spectroscopy,
wherein in the process step b) the N is introduced at least into the wall region (105) from the wall surface (103) up to the functionalising depth (115),
wherein in the process a plasma is obtained which comprises the N which in the process step b) is introduced at least into the wall region (105),
wherein in the process step b) the wall surface (103) is contacted with the plasma at least across the surface region (104).

6. The process (300) according to claim 5, wherein the glass of the wall of glass (101) has a glass softening temperature,
wherein in the process step b) (302) the wall of glass (101) has a temperature in K of less than 80 % of the glass softening temperature in K.

7. A closed container (200) comprising a wall of glass (101) which at least partially surrounds an interior volume (102) which comprises a pharmaceutical composition (201);
wherein the wall of glass (101) has a wall surface (103), which comprises a surface region (104);
wherein in the surface region (104) the wall surface (103) has a content of
a) N in a range from 0.3 to 10.0 at-%, and
b) Si at least 5 at-%,
wherein the preceding contents are determined by an X-ray photoelectron spectroscopy;
wherein the wall of glass (101) comprises a wall region (105), which has the surface region (104);
wherein in the wall region (105) the wall of glass (101) has a content of chemically bound N which is detectable by a time-of-flight secondary ion mass spectrometry;
wherein the wall of glass (101) has a wall thickness;
wherein in the wall region (105) the wall of glass (101) has the content of chemically bound N throughout a functionalising depth (115) which extends from the wall surface (103) along the wall thickness into the wall of glass (101);
wherein the functionalising depth (115) is in a range from 5 nm to 10 µm.

8. A process (400) for making the closed container (200) according to claim 7, the process (400) comprising as process steps
A) providing the hollow body (100) according to any of the claims 1 to 4;
B) inserting a pharmaceutical composition (201) into the interior volume (102); and
C) closing the hollow body (100).

9. A use of the hollow body (100) according to any of the claims 1 to 4 for packaging a pharmaceutical composition (201).

## Patentansprüche

1. Ein Hohlkörper (100) mit einer Wand aus Glas (101), die ein Innenvolumen (102) des Hohlkörpers (100) zumindest teilweise umgibt;
wobei die Glaswand (101) eine Wandfläche (103) aufweist, die einen Oberflächenbereich (104) umfasst;
wobei zumindest im Oberflächenbereich (104) die Wandoberfläche (103) einen Gehalt an
a) N in einem Bereich von 0,3 bis 10,0 at-%, und
b) Si mindestens 5 at-%,
wobei die vorgenannten Gehalte durch Röntgenphotoelektronenspektroskopie bestimmt werden;
wobei die Glaswand (101) einen Wandbereich (105) aufweist, der den Oberflächenbereich (104) hat;
wobei die Glaswand (101) im Wandbereich (105) einen Gehalt an chemisch gebundenem N aufweist, der durch eine Flugzeit-Sekundärionen-Massenspektrometrie nachweisbar ist;
wobei die Glaswand (101) eine Wandstärke aufweist;
wobei die Glaswand (101) im Wandbereich (105) den Gehalt an chemisch gebundenem N über eine Funktionalisierungstiefe (115) aufweist, die sich von der Wandoberfläche (103) entlang der Wanddicke in die Glaswand (101) erstreckt;
wobei die Funktionalisierungstiefe (115) in einem Bereich von 5 nm bis 10 µm liegt.

2. Der Hohlkörper (100) nach Anspruch 1, wobei die Wandoberfläche (103) im Oberflächenbereich (104) ferner einen O-Gehalt in einem Bereich von 35 bis 70 at-% aufweist, wobei der Gehalt an O durch die Röntgenphotoelektronenspektroskopie bestimmt wird.

3. Der Hohlkörper (100) nach Anspruch 1 oder 2, wobei die Wandfläche (103) im Oberflächenbereich (104) ferner einen C-Gehalt von weniger als 20 at-% aufweist,
wobei der Gehalt an Kohlenstoffatomen durch die Röntgenphotoelektronenspektroskopie bestimmt wird.

4. Der Hohlkörper (100) nach einem der vorhergehenden Ansprüche, wobei die Röntgenphotoelektronenspektroskopie des Oberflächenbereichs (104) einen N1s-Peak bei einer Bindungsenergie in einem Bereich von 397,5 bis 405,0 eV zeigt.

5. Ein Verfahren (300) zur Herstellung des Hohlkörpers (100) nach einem der vorhergehenden Ansprüche, wobei das Verfahren (300) als Verfahrensschritte umfasst
a) Bereitstellung eines Hohlkörpers, der eine Wand aus Glas (101) umfasst,
wobei die Glaswand (101)
i) ein Innenvolumen (102) des Hohlkörpers zumindest teilweise umgibt,
ii) hat eine Wandfläche (103), die einen Oberflächenbereich (104) umfasst,
iii) einen Wandbereich (105) umfasst, der den Oberflächenbereich (104) aufweist; und
b) Einbringen von N zumindest in den Wandbereich (105), wodurch ein N-Gehalt der Wandoberfläche (103) zumindest im Oberflächenbereich (104) in einem Bereich von 0,3 bis 10,0 Atom-% erhalten wird,
wobei der vorhergehende Gehalt an N durch Röntgenphotoelektronenspektroskopie bestimmt wird,
wobei im Verfahrensschritt b) das N zumindest in den Wandbereich (105) von der Wandoberfläche (103) bis zur Funktionalisierungstiefe (115) eingebracht wird,
wobei bei dem Verfahren ein Plasma erhalten wird, das das N enthält, das im Verfahrensschritt b) zumindest in den Wandbereich (105) eingebracht wird,
wobei im Verfahrensschritt b) die Wandoberfläche (103) zumindest über den Oberflächenbereich (104) mit dem Plasma kontaktiert wird.

6. Das Verfahren (300) nach Anspruch 5, wobei das Glas der Glaswand (101) eine Glaserweichungstemperatur aufweist,
wobei im Verfahrensschritt b) (302) die Glaswand (101) eine Temperatur in K von weniger als 80 % der Glaserweichungstemperatur in K aufweist.

7. Ein geschlossener Behälter (200) mit einer Glaswand (101), die zumindest teilweise ein Innenvolumen (102) umgibt, das eine pharmazeutische Zusammensetzung (201) enthält;
wobei die Glaswand (101) eine Wandfläche (103) aufweist, die einen Oberflächenbereich (104) umfasst;
wobei im Oberflächenbereich (104) die Wandoberfläche (103) einen Gehalt an
a) N in einem Bereich von 0,3 bis 10,0 at-%, und
b) Si mindestens 5 at-%,
wobei die vorgenannten Gehalte durch Röntgenphotoelektronenspektroskopie bestimmt werden;
wobei die Glaswand (101) einen Wandbereich (105) aufweist, der den Oberflächenbereich (104) hat;
wobei die Glaswand (101) im Wandbereich (105) einen Gehalt an chemisch gebundenem N aufweist, der durch eine Flugzeit-Sekundärionen-Massenspektrometrie nachweisbar ist;
wobei die Glaswand (101) eine Wandstärke aufweist;
wobei die Glaswand (101) im Wandbereich (105) den Gehalt an chemisch gebundenem N über eine Funktionalisierungstiefe (115) aufweist, die sich von der Wandoberfläche (103) entlang der Wanddicke in die Glaswand (101) erstreckt;
wobei die Funktionalisierungstiefe (115) in einem Bereich von 5 nm bis 10 µm liegt.

8. Ein Verfahren (400) zur Herstellung des geschlossenen Behälters (200) nach Anspruch 7, wobei das Verfahren (400) als Verfahrensschritte umfasst
A) Bereitstellung des Hohlkörpers (100) nach einem der Ansprüche 1 bis 4;
B) Einbringen einer pharmazeutischen Zusammensetzung (201) in das Innenvolumen (102); und
C) Schließen des Hohlkörpers (100).

9. Eine Verwendung des Hohlkörpers (100) nach einem der Ansprüche 1 bis 4 zur Verpackung einer pharmazeutischen Zusammensetzung (201).

## Revendications

1. Un corps creux (100), comprenant une paroi de verre (101) qui entoure au moins partiellement un volume intérieur (102) du corps creux (100) ;
dans lequel la paroi de verre (101) a une surface de paroi (103), qui comprend une zone de surface (104) ;
dans laquelle, au moins dans la zone de surface (104), la surface de la paroi (103) présente une teneur en
a) N dans une fourchette de 0,3 à 10,0 at-%, et
b) Si au moins 5 at-%,
dans lequel les teneurs précédentes sont déterminées par spectroscopie photoélectronique à rayons X ;
dans lequel la paroi de verre (101) comprend une zone de paroi (105), qui a la zone de surface (104) ;
dans laquelle la paroi de verre (101) présente, dans la zone de la paroi (105), une teneur en N chimiquement lié qui peut être détectée par spectrométrie de masse d'ions secondaires à temps de vol ;
dans lequel la paroi de verre (101) a une épaisseur de paroi ;
dans laquelle, dans la région de la paroi (105), la paroi de verre (101) contient de l'azote chimiquement lié sur une profondeur de fonctionnalisation (115) qui s'étend de la surface de la paroi (103) à l'épaisseur de la paroi de verre (101) ;
dans lequel la profondeur de fonctionnalisation (115) est comprise entre 5 nm et 10 µm.

2. Le corps creux (100) selon la revendication 1, dans lequel dans la zone de surface (104) la surface de la paroi (103) a en outre une teneur en O comprise entre 35 et 70 at-%,
où la teneur en O est déterminée par spectroscopie photoélectronique à rayons X.

3. Le corps creux (100) selon la revendication 1 ou 2, dans lequel dans la zone de surface (104) la surface de la paroi (103) a en outre une teneur en C inférieure à 20 at-%,
la teneur en atomes de carbone étant déterminée par la spectroscopie de photoélectrons X.

4. Le corps creux (100) selon l'une quelconque des revendications précédentes, dans lequel la spectroscopie photoélectronique à rayons X de la région de surface (104) présente un pic N1s à une énergie de liaison comprise entre 397,5 et 405,0 eV.

5. Un procédé (300) de fabrication du corps creux (100) selon l'une quelconque des revendications précédentes, le procédé (300) comprenant les étapes suivantes
a) fournir un corps creux, comprenant une paroi de verre (101),
dans lequel la paroi de verre (101)
i) entoure au moins partiellement un volume intérieur (102) du corps creux,
ii) possède une surface de paroi (103), qui comprend une zone de surface (104),
iii) comprend une zone de paroi (105), qui comporte la zone de surface (104) ; et
b) l'introduction de N au moins dans la région de la paroi (105), ce qui permet d'obtenir une teneur en N de la surface de la paroi (103) au moins dans la région de la surface (104) comprise entre 0,3 et 10,0 at-%,
dans lequel la teneur précédente en N est déterminée par spectroscopie photoélectronique à rayons X,
dans lequel, à l'étape b) du processus, le N est introduit au moins dans la région de la paroi (105) depuis la surface de la paroi (103) jusqu'à la profondeur de fonctionnalisation (115),
dans lequel le procédé permet d'obtenir un plasma comprenant l'azote qui, à l'étape b) du procédé, est introduit au moins dans la région de la paroi (105),
dans lequel, lors de l'étape b) du processus, la surface de la paroi (103) est mise en contact avec le plasma au moins à travers la région de la surface (104).

6. Le procédé (300) selon la revendication 5, dans lequel le verre de la paroi de verre (101) a une température de ramollissement du verre,
dans lequel, à l'étape b) (302) du processus, la paroi de verre (101) a une température en K inférieure à 80 % de la température de ramollissement du verre en K.

7. Un récipient fermé (200) comprenant une paroi de verre (101) qui entoure au moins partiellement un volume intérieur (102) contenant une composition pharmaceutique (201) ;
dans lequel la paroi de verre (101) a une surface de paroi (103), qui comprend une zone de surface (104) ;
dans laquelle, dans la zone de surface (104), la surface de la paroi (103) présente une teneur en
a) N dans une fourchette de 0,3 à 10,0 at-%, et
b) Si au moins 5 at-%,
dans lequel les teneurs précédentes sont déterminées par spectroscopie photoélectronique à rayons X ;
dans lequel la paroi de verre (101) comprend une zone de paroi (105), qui a la zone de surface (104) ;
dans laquelle la paroi de verre (101) présente, dans la zone de la paroi (105), une teneur en N chimiquement lié qui peut être détectée par spectrométrie de masse d'ions secondaires à temps de vol ;
dans lequel la paroi de verre (101) a une épaisseur de paroi ;
dans laquelle, dans la région de la paroi (105), la paroi de verre (101) contient de l'azote chimiquement lié sur une profondeur de fonctionnalisation (115) qui s'étend de la surface de la paroi (103) à l'épaisseur de la paroi de verre (101) ;
dans lequel la profondeur de fonctionnalisation (115) est comprise entre 5 nm et 10 µm.

8. Un procédé (400) de fabrication du récipient fermé (200) selon la revendication 7, le procédé (400) comprenant les étapes suivantes
A) fournir le corps creux (100) selon l'une des revendications 1 à 4 ;
B) l'insertion d'une composition pharmaceutique (201) dans le volume intérieur (102) ; et
C) fermer le corps creux (100).

9. Une utilisation du corps creux (100) selon l'une des revendications 1 à 4 pour le conditionnement d'une composition pharmaceutique (201).
